Europäisches Patentamt

European Patent Office

Office européen des brevets

(11) Publication number : **0 487 271 A2**

# (12) EUROPEAN PATENT APPLICATION

(21) Application number : **91310592.0**

(22) Date of filing : **15.11.91**

(51) Int. Cl.$^5$: **C08L 67/02, C08K 13/04,** // (C08K13/04, 5:09, 7:00)

(30) Priority : **19.11.90 JP 315486/90**

(43) Date of publication of application :
**27.05.92 Bulletin 92/22**

(84) Designated Contracting States :
**AT BE CH DE DK ES FR GB GR IT LI LU NL SE**

(71) Applicant : **POLYPLASTICS CO. LTD.**
**3-13, Azuchicho, 2-chome**
**Chuo-Ku Osaka-shi Osaka 541 (JP)**

(72) Inventor : **Nakano, Michio**
**885-11, Miyajima**
**Fuji-shi, Shizuoka (JP)**
Inventor : **Kanoto, Osamu**
**7-1, Denbou**
**Fuji-shi, Shizuoka 417 (JP)**
Inventor : **Goshima, Kazuya**
**885-11, Miyajima**
**Fuji-shi, Shizuoka (JP)**
Inventor : **Matsunaga, Nobuyuki**
**104, Kamiyokowari**
**Fuji-shi, Shizuoka (JP)**

(74) Representative : **W.P. Thompson & Co.**
**Coopers Building, Church Street**
**Liverpool L1 3AB (GB)**

(54) **Thin-walled molded product made of polybutylene terephthalate resin.**

(57)    A thin-walled molded article molded from a polybutylene terephthalate composition characterised by comprising for each 100 parts by weight of (A) polybutylene terephthalate having a melt index of 40 to 200, determined at 235°C with a load thereon of 2160 g according to ASTM D-1238, 1 to 60 parts by weight of (B) glass flakes having an average size of 10 to 200 micronmeters and 0.01 to 5 parts by weight of (C) a metal salt of an aliphatic acid. It is resistant to warping.

EP 0 487 271 A2

Jouve, 18, rue Saint-Denis, 75001 PARIS

The present invention relates to a thin-walled molded product made of polybutylene terephthalate, and more specifically, to a thin-walled molded product which demonstrates a small amount of deformation, superior dimensional accuracy and superior mechanical properties, and wherein the wall thickness is 0.8mm or less.

Polybutylene terephthalate resin demonstrates superior mechanical properties, electrical properties as well as physical and chemical properties as a crystallizing thermoplastic resin. In addition, as it also is easy to process, it is used as an engineering plastic in a wide range of applications including automobiles and electrical and electronic components.

Although polybutylene terephthalate resin is used alone in various molded products, depending on the particular field of application, it is also blended with various strengthening agents and additives for the purpose of improving particularly its mechanical properties. In fields which require a high degree of mechanical strength and rigidity, fibrous strengthening agents in the form of glass fiber are known to be used.

Although components containing such fibrous strengthening agents have a high degree of mechanical strength and rigidity, due to the formation of anisotropy during molding of components containing such fibrous strengthening agents, these agents have the disadvantage of causing the occurrence of warping in the molded product during production of plate-shaped or box-shaped molded products.

Numerous measures have been proposed for preventing the occurrence of warping for the purpose of correcting this disadvantage. Examples of these include a component which contains a spherical strengthening agent in the form of glass beads, as well as a component which uses a sheet-form strengthening agent in the form of mica.

As a result, although the occurrence of warping during molding has been considerably improved, there are still cases when these corrective measures are inadequate depending on the shape and application of the molded product.

Particularly in the case of plate-shaped or box-shaped molded products having particularly thin walls, such as the components of thin-walled connectors, microswitches, miniature coil bobbins and floppy disks, there are various problems including molding defects caused by decreased fluidity resulting from blending of the strengthening agent (inadequate filling of the mold), non-uniform flow of resin for the same reason, and increased occurrence of warping. There is, therefore a need for even further improved materials.

It has now been found that a thin-walled molded product made of polybutylene terephthalate resin, having superior mechanical properties and fluidity and wherein the degree of warping during molding is extremely low, can be obtained by using a resin material in which the polybutylene terephthalate has a viscosity within a specific selected range, and the resin material also contains plate glass flakes having an averages flake diameter within a selected range and also contains a metal salt of a fatty acid.

Accordingly the present invention provides a thin-walled moulded product made of polybutylene terephthalate resin demonstrating a low degree of warping in thin-walled products characterised in that it is formed by moulding of a resin material wherein each 100 parts by weight of:

(A) polybutylene terephthalate resin having a melt index of 40-200 as measured under the conditions of a temperature of 235°C and a load of 2160 g in accordance with ASTM D-1238,

is blended with 1-60 parts by weight of:

(B) plate glass flakes having an average flake diameter of 10-200 micrometers; and,

0.01-5 parts by weight of:

(C) a fatty acid metal salt.

Polybutylene terephthalate, the base resin of the resin material of the present invention, is a polyester wherein the repeating unit is butylene terephthalate. More specifically, this may be a polyester that is obtained by condensation of 1,4-butanediol and terephthalic acid or its lower alcohol ester, which is a copolymer consisting primarily of polybutylene terephthalate.

The present invention requires the use of polybutylene terephthalate having a melt index of 40-200 as measured under the conditions of a temperature of 235°C and a load of 2160 g in accordance with ASTM D-1238, and preferably a melt index of 60-150. A melt index of less than 40 has been found to result in poor fluidity, inferior moulding and greater warping deformation. On the other hand, it has been found that a melt index in excess of 200 although demonstrating good fluidity only allows moulded products which are inadequate in strength to be obtained.

The plate glass flakes that are used in the present invention are those having an average flake diameter (length) of 10-200 micrometers, and preferably 10-100 micrometers. When the average flake diameter is less than 10 micrometers, it has been found that there is virtually no improvement in warping. When the average flake diameter is in excess of 200 micrometers, it has been found that a high degree of injection pressure is required during moulding due to susceptibility to decreased fluidity during moulding and as a result warping is increased.

It is preferred that the flake thickness be 0.1-10 micrometers.

Although such plate glass flakes can be blended as is, it is preferable to use plate glass flakes which have been surface treated with a silane-based, titanate-based or epoxy-based coupling agent in order to improve affinity and adhesion to the polybutylene terephthalate resin.

The amount of said plate glass flakes (B) which are added is 1-60 parts by weight, and preferably 1-40 parts by weight for every 100 parts by weight of polybutylene terephthalate resin (A). When the amount of plate glass flakes (B) is less than 1 part by weight, it has been found that effects resulting in prevention of the occurrence of warping are minimal, and when the amount of plate glass flakes (B) is in excess of 60 parts by weight, it has been found that fluidity during moulding is reduced resulting in inadequate filling of the moulded product.

The presence of fatty acid metal salt (C) not only increases the fluidity of the resin itself, but also beings about synergistic effects resulting in further lowering in deformation and warping in the component to which the plate glass flakes are added.

The fatty acid metal salt which is used for said purpose is preferably a metal salt of a fatty acid having 12-32 carbon atoms.

Examples of such fatty acids having 12-32 carbon atoms include saturated fatty acids such as caproic acid, caprylic acid, undecylic acid, lauric acid, tridecylic acid, myristic acid, palmitic acid, stearic acid, behenic acid, lignolinic acid, cerotic acid, montanic acid and melissic acid, or unsaturated fatty acids such as oleic acid, elaidic acid, linoleic acid, linolenic acid, arachidonic acid, brassidic acid, erucic acid and recinoleic acid. The metal salts may be for example the salts of calcium, magnesium, zinc, sodium and aluminium.

Preferred fatty acid metal salts are those of palmitic acid, stearic acid or behenic acid, and more preferably, one or more selected from zinc palmitate, zinc stearate or sodium stearate.

The amount of component (C) that is added with respect to 100 parts by weight of component (A) is 0.01-5 parts by weight, and preferably 0.1-2 parts by weight. If the amount of component (C) is too little, it has been found that there is very little fluidity and virtually no effects resulting in a reduction in warping deformation. If the amount of component (C) is too large, it has been found that there is a decrease in mechanical properties as well as the occurrence of problems such as bleed out.

The resin material for thin-wall moulding of the present invention can be used supplementarily in combination with small amounts of other thermoplastic resins within a range that does not hinder its objective. Any other thermoplastic resins can be used as long as such resins are stable at high temperatures.

Examples of such thermoplastic resins include polyamides, ABS, polyphenylene oxides, polyalkylacrylates, polyacetals, polysulfones, polyether sulfones, polyether imides, polyether ketaones and fluororesins. In addition, two or more types of these thermoplastic resins can be used in combination.

Known substances which are typically added to thermoplastic resins in order to yield desirable properties corresponding to the specific purpose of use can naturally be added to the resin material for thin-walled moulding of the present invention. Examples of such substances include stabilizers such as anti-oxidants, thermal stabilizers and UV absorbing agents, antistatic agents, flame retardants, colouring agents such as dyes and pigments, lubricants, plasticizers and crystallization promoters, crystal nuclei and inorganic fillers (excluding component (B) of this application).

The resin material for thin-walled moulding of the present invention can be easily prepared using known equipment and processes that are ordinarily used as processes for preparing conventional resin components. Examples of processes which can be used include: i) a process wherein pellets are prepared by milling and extruding using an extruding machine following mixture of each of the components, followed by appropriate moulding of said pellets; ii) a process wherein after first preparing pellets having different compositions, prescribed amounts of said pellets are mixed and then supplied for moulding followed by obtaining moulded products having the desired composition; and, iii) a process wherein one or two or more of the components are charged directly into the moulding machine. In addition, the formation of a portion of the resin components into fine particles and then mixing those particles with the other components is a preferable process in terms of performing uniform blending of components.

Specific examples of the thin-walled moulded products which can result from the moulding of said resin material include components for thin-walled connectors, microswitch cases, miniature coil bobbins, computer keyboard frames and floppy disks. Preferably, such moulded products are thin-walled moulded products wherein 70% or more of the wall thickness of the moulded product is 0.8mm or less, and particularly for use as components for floppy disks. It has been found that when the wall thickness of the moulded product becomes increasingly thicker, the resin ends up flowing into tiny gaps in the mold during molding due to the favourable fluidity. As a result, burrs are formed on the molded product. It has further been found that when the molding conditions are adjusted to minimize the formation of burrs in such relatively thick walled articles, warping and deformation results, making it extremely difficult to obtain a molded product of satisfactory appearance.

Thus, thin-walled molded products made of the polybutylene terephthalate resin of the present invention can be suitably used in molded components of all types of fields which require superior warping and deformation

3

properties in thin-walled molded products, examples of which include components for thin-walled connectors, microswitch cases, miniature coil bobbins, computer keyboard frames, microrelay cases and floppy disks.

Although the following provides a detailed explanation of the present invention with reference to embodiments, the present invention is not limited to said embodiments.

Furthermore, the measurement methods for the physical properties indicated in the following embodiments are as described below.

## 1) Measurement of Fluidity (Bar Flow Flow Length)

Using the pellets composed of the components of Table 1, thin-walled testpieces (width: 5 mm, thickness: 0,3 mm) were molded using a molding machine set to the conditions indicated below. Fluidity was then evaluated based on those flow lengths (length of resin filling).

Cylinder temperature: 270°C
Injection pressure: 900 kg/cm$^2$
Mold temperature: 60°C

## 2) Measurement of Amount of Deformation

Using the pellets composed of the components in Table 1, square flat testpieces (having one pin gate in the center) measuring 50 mm on a side (thickness: 0.7 mm) were molded using a molding machine set to the conditions indicated below. The portion of the testpiece of maximum deformation with the testpiece lying on a flat surface table (i.e. the location where the gap between the surface table and the testpiece is the greatest) was measured as the amount of deformation.

Cylinder temperature: 260°C
Injection pressure: 650 kg/cm$^2$
Mold temperature: 60°C

## 3) Measurement of Physical Properties

Izod impact strength and melt index (MI) in compliance with ASTM D-256 were measured at a temperature of 235°C and a load of 2160 g according to ASTM D-1238.

### Embodiments 1-7 and Comparative Examples 1-8

Using polybutylene terephthalate having a melt index of 70 for polybutylene terephthalate resin (A), the plate glass flakes (B) and fatty acid metal salts (C) indicated in Table 1 were added and blended in the proportions indicated in Table 1. Pellet-shaped resin components for molding were then obtained with a 30 mmø double-shaft extruding machine. Next, the various testpieces were made by an injection molding machine using these pellets followed by evaluation of the above-mentioned physical properties. For comparison purposes, pellets were also made in the same manner as in the above embodiments using components in which component (B) or component (C) were omitted, as well as using components in which plate glass not belonging to the subject matter of the present application, talc or mica were used for component (B). These comparative examples were then evaluated in the same manner as the embodiments.

The results for both the embodiments and comparative examples are indicated in Table 1.

### Embodiment 8 and Comparative Example 9

With the exception of changing component (A) of Embodiment 2 to polybutylene terephthalate having a melt index of 120, testing and evaluation were performed in the same manner as Embodiment 2. Those results are indicated in Table 1. On the other hand, a comparative example wherein component (C) was omitted was tested and evaluated in the same manner as Embodiment 8. Those results are also indicated in Table 1.

TABLE I

| | | | | Units | Embodiments | | | | | | | | Comparative Examples | | | | | | | | |
|---|---|---|---|---|---|---|---|---|---|---|---|---|---|---|---|---|---|---|---|---|---|
| | | | | | 1 | 2 | 3 | 4 | 5 | 6 | 7 | 8 | 1 | 2 | 3 | 4 | 5 | 6 | 7 | 8 | 9 |
| C O M P O S I T I O N | A*1 | Polybutylene Terephthalate | A-1 | Parts by weight | 100 | 100 | 100 | 100 | 100 | 100 | 100 | | 100 | 100 | 100 | 100 | 100 | 100 | 100 | 100 | |
| | | | A-2 | " | | | | | | | | 100 | | | | | | | | | 100 |
| | B*2 | Plate glass flakes or talc or mica | B-1 | " | 5 | 10 | 30 | 10 | | | | 10 | 5 | | 10 | | 30 | | | | 10 |
| | | | B-2 | " | | | | | 10 | 10 | 10 | | | | | | | 10 | | | |
| | | | B'-1 | " | | | | | | | | | | | | 10 | | | | | |
| | | | B'-2 | " | | | | | | | | | | | | | | | 5 | | |
| | | | B'-3 | " | | | | | | | | | | | | | | | | 5 | |
| | C*3 | Fatty Acid Metal Salt | C-1 | " | 0.3 | 0.3 | 0.3 | 1.0 | 0.3 | | | 0.3 | | 0.3 | | 0.3 | | | 0.3 | 0.3 | |
| | | | C-2 | " | | | | | | 0.3 | | | | | | | | | | | |
| | | | C-3 | " | | | | | | | 0.3 | | | | | | | | | | |
| Physical Properties | | Fluidity | | mm | 30 | 27 | 22 | 35 | 25 | 28 | 24 | 36 | 22 | 33 | 17 | 27 | 12 | 20 | 23 | 22 | 20 |
| | | Amount of Deformation | | mm | 0.6 | 0.4 | 0.6 | 0.5 | 0.5 | 0.6 | 0.4 | 0.4 | 1.2 | 1.3 | 1.0 | 1.1 | 0.8 | 1.1 | 1.4 | 1.3 | 0.9 |
| | | Izod Impact Strength | | kg·cm/cm | 2.9 | 3.2 | 3.5 | 2.7 | 3.2 | 3.0 | 3.0 | 2.3 | 3.0 | 1.7 | 2.7 | 3.2 | 3.4 | 1.6 | 1.2 | 0.7 | 1.6 |

*1  A-1: Melt index 70
    A-2: Melt index 120

*2  B-1: Average flake diameter: 50 micrometers
    B-2: Average flake diameter: 100 micrometers
    B'-1: Average flake diameter: 300 micrometers
    B'-2: Talc average flake diameter: 30 micrometers
    B'-3: Mica average flake diameter: 30 micrometers

*3  C-1: Zinc stearate
    C-2: Sodium stearate
    C-3: Zinc palmitate

EP 0 487 271 A2

As is clear from the explanations and embodiments indicated above, the resin material of the present invention, which is composed by adding and blending plate glass flakes having a specific flake diameter and a fatty acid metal salt to a polybutylene terephthalate resin having a specific viscosity, demonstrates a small degree of deformation, superior fluidity during molding as well as superior mechanical properties especially in thin-walled molded products.

## Claims

1. A thin-walled molded article of a polybutylene terephtharate composition characterised by comprising for each 100 parts by weight of (A) a polybutylene terephthalate having a melt index of 40 to 200, determined at 235°C with a load thereon of 2160 g according to ASTM D-1238, 1 to 60 parts by weight of (B) glass flakes having an average size of 10 to 200 micronmeters and 0.01 to 5 parts by weight of (C) a metal salt of an aliphatic acid.

2. A thin-walled molded article as claimed in claim 1 characterised in that the melt index of polybutylene terephthalate resin (A) is 60-150.

3. A thin-walled molded article as claimed in claim 1 or claim 2 characterised in that the average flake diameter of plate glass flakes (B) is 10-110 micrometers.

4. A thin-walled molded article as claimed in any of claims 1-3 characterised in that the fatty acid which composes fatty acid metal salt (C) is one or more types selected from palmitic acid, stearic acid and behenic acid.

5. A thin-walled molded article as claimed in any of claims 1-4 characterised in that the metal which composes fatty acid metal salt (C) is either zinc or sodium.

6. A thin-walled molded article as claimed in any of claims 1-5 characterised in that 70% or more of the wall thickness of said molded product is 0.8mm or less.

7. A thin-walled molded article as claimed in any of claims 1-6 which is a component of a thin-walled connector, a microswitch case, a miniature coil bobbin, a computer keyboard frame or a floppy disk.